# EUROPÄISCHE PATENTSCHRIFT

(11) **EP 2 648 950 B1**
(45) Veröffentlichungstag und Bekanntmachung des Hinweises auf die Patenterteilung: **08.11.2017**
(21) Anmeldenummer: 11805401.4
(22) Anmeldetag: 05.12.2011
(51) Int. Cl.: B60T 8/17, B60T 8/172

(54) **VERFAHREN UND VORRICHTUNG ZUR ERKENNUNG EINES ANHÄNGERS EINES KRAFTFAHRZEUGS**
METHOD AND DEVICE FOR DETECTING A MOTOR VEHICLE TRAILER
PROCÉDÉ ET DISPOSITIF DE DÉTECTION D'UNE REMORQUE D'UN VÉHICULE AUTOMOBILE

(30) Priorität: 08.12.2010 DE 102010053818
(43) Veröffentlichungstag der Anmeldung: 16.10.2013
(73) Patentinhaber: Audi AG, 85045 Ingolstadt (DE)
(72) Erfinder: KOSSIRA, Christoph, 85053 Ingolstadt (DE); BAUDISCH, Andreas, 93087 Alteglofsheim (DE)
(86) Internationale Anmeldenummer: PCT/EP2011/006073
(87) Internationale Veröffentlichungsnummer: WO 2012/076138

(56) Entgegenhaltungen:
- EP-A1- 2 045 155
- DE-A1- 10 023 326
- US-A- 5 287 085
- US-A1- 2007 260 385
- US-A1- 2010 156 667

## Beschreibung

Verfahren und Vorrichtung zur Erkennung eines Anhängers oder Aufliegers eines Kraftfahrzeugs, wobei der Anhänger durch eine Kupplungseinrichtung mit dem Kraftfahrzeug verbindbar ist und wobei eine Steuereinrichtung während einer Betriebsphase des Kraftfahrzeugs Daten zum aktuell verbundenen Anhänger sammelt und speichert.

Derartige Verfahren und Vorrichtungen werden im Kraftfahrzeugbau dazu verwendet, um anhängerbezogene Informationen zu sammeln, zu speichern und eventuell weiteren Fahrzeugsubsystemen zur Verfügung zu stellen. Ein Anhänger oder Auflieger kann mit seiner Deichsel an der Kupplungseinrichtung des Kraftfahrzeugs befestigt werden. Insbesondere zum Zwecke der Fahrdynamikregelung werden Daten von der Steuereinrichtung ermittelt, mit denen das Fahrverhalten des aktuell verbundenen Anhängers besser abgeschätzt werden kann.

Die DE 100 23 326 A1 beschreibt ein Verfahren und eine Vorrichtung zur Erkennung eines Anhängers oder Aufliegers eines Kraftfahrzeugs, wobei ein Bremslicht des Anhängers oder Aufliegers fahrerunabhängig angesteuert wird. Der in einer dem Bremslicht des Anhängers oder Aufliegers zugeordneten Leitung fließende Strom wird gemessen und anhand des Messergebnisses festgestellt, ob ein Anhänger oder Auflieger vorhanden ist oder nicht. Nachteilig ist, dass mit dem gezeigten Verfahren nur eine Unterscheidung bezüglich eines Vorhandenseins oder eines Nichtvorhandenseins eines Anhängers oder Aufliegers möglich ist. Die für ein Fahrdynamiksystem während einer Betriebsphase des Kraftfahrzeugs ermittelbaren Daten zum Anhänger oder Auflieger müssen somit nach Beendigung jeder Betriebsphase wieder verworfen werden, da nicht sichergestellt werden kann, dass weiterhin derselbe Anhänger oder Auflieger mit dem Kraftfahrzeug verbunden ist.

Die US 5,287,085 A offenbart eine Schaltungsanordnung, die anhand eines Prüfsignals bestimmen kann, ob an das Kraftfahrzeug ein Anhänger mit einem herkömmlichen Bremssystem oder einem Bremssystem mit ABS-Regelung angehängt ist. Dementsprechend werden die Bremslichter des Anhängers auf unterschiedliche Weise angesteuert. Wird der Anhänger entfernt, dann setzt die Schaltung den gespeicherten Zustand zurück, bis ein neuer Anhänger angehängt und automatisch geprüft wird. Diese Schaltung hat den Nachteil, dass sich prinzipiell nur zwei verschiedene Typen von Anhängern, nämlich mit oder ohne ABS-Bremssystem unterscheiden lassen. Verschiedene Anhänger aus der gleichen Gruppe können hingegen nicht unterschieden werden.

Aufgabe der vorliegenden Erfindung ist es daher ein Verfahren und eine Vorrichtung zur Erkennung eines Anhängers eines Kraftfahrzeugs bereitzustellen, mit der ein Wechsel des Anhängers noch zuverlässiger detektiert werden kann.

Diese Aufgabe wird durch die Merkmale des Patentanspruchs 1 bzw. 3 gelöst.

Ein Verfahren zur Erkennung eines Anhängers eines Kraftfahrzeugs umfasst die folgenden Schritte:
- Sammeln und speichern von Daten zum aktuell verbundenen Anhänger während einer Betriebsphase des Kraftfahrzeugs;
- Feststellen einer Trennung des Anhängers vom Kraftfahrzeug mittels eines charakteristischen Prüfsignals, umfassend einen Deichselwinkel des Anhängers, während einer Abstellphase des Kraftfahrzeugs;
- Verwerfen der Daten, wenn eine Änderung des Prüfsignals erfasst wurde.

Indem der Anhänger (als Anhänger sollen in diesem Zusammenhang auch Auflieger verstanden werden) während der Abstellphase des Kraftfahrzeugs mittels eines Prüfsignals auf eine Trennung vom Kraftfahrzeug hin überprüft wird, kann beurteilt werden, ob die während der Betriebsphase des Kraftfahrzeugs gesammelten Daten zum aktuell verbundenen Anhänger gespeichert bleiben können oder verworfen werden müssen. Als Prüfsignal wird der Deichselwinkel, also der Winkel zwischen Kraftfahrzeug und Anhänger, beim Wechsel zwischen Betriebsphase und Abstellphase überwacht. Hat sich der Deichselwinkel während der Abstellphase geändert, so ist von einem Wechsel des Anhängers auszugehen. Wird während der Abstellphase keine Trennung des Anhängers vom Kraftfahrzeug festgestellt, so können die Daten bei einer nachfolgenden Betriebsphase, beispielsweise zum Zwecke der Fahrdynamikregelung oder für Assistenzsysteme, weiterverwendet werden. Als Daten kommen dabei unter anderem die Länge einer Deichsel des Anhängers, der Knickwinkel zwischen Kraftfahrzeug und Anhänger, sowie ein Knickwinkel-Offset in Betracht, die während der Betriebsphase durch die Auswertung von am Kraftfahrzeug verbauten Sensoren "gelehnt" werden können. Die Abstellphase unterscheidet sich von der Betriebsphase darin, dass das Kraftfahrzeug in einem nicht fahrbereiten Zustand abgestellt ist. Diese Phase wird in der Regel für einen Wechsel des Anhängers benutzt.

In einer bevorzugten Ausführung des Verfahrens repräsentiert das Prüfsignal einen elektrischen Widerstand mindestens einer Glühlampe des Anhängers und den Deichselwinkel des Anhängers. Der elektrische Widerstand der am Anhänger verbauten Glühlampen weist einen charakteristischen Wert auf, wodurch ein Anhänger identifiziert werden kann.

Vorrichtung zur Erkennung eines Anhängers eines Kraftfahrzeugs, wobei der Anhänger durch eine Kupplungseinrichtung mit dem Kraftfahrzeug verbindbar ist, wobei eine Steuereinrichtung während einer Betriebsphase des Kraftfahrzeugs Daten zum aktuell verbundenen Anhänger sammelt und speichert und wobei Mittel zur Identifikation des Anhängers während einer Abstellphase des Kraftfahrzeugs eine Trennung des verbundenen Anhängers vom Kraftfahrzeug mittels eines Prüfsignals feststellen können, wobei die Mittel zur Identifikation einen Deichselwinkel des Anhängers während der Abstellphase ermitteln und mit dem Deichselwinkel zur folgenden Betriebsphase vergleichen, wobei die Trennung des verbundenen Anhängers vom Kraftfahrzeug festgestellt wird, wenn sich die Deichselwinkel unterscheiden.

Die Kupplungseinrichtung befindet sich am Heck des Kraftfahrzeugs und weist häufig einen Kugelkopf auf, an dem eine Deichsel des Anhängers lösbar formschlüssig angreifen kann. Eine solche Verbindung erlaubt das Verschwenken der Deichsel um die Kupplungseinrichtung, ohne dass diese sich unwillentlich voneinander lösen können. Eine Steuereinrichtung sammelt während der Betriebsphase Daten zum aktuell verbundenen Anhänger, um diese zur Verbesserung der Fahrdynamikregelung und/oder zum Betrieb von Assistenzsystemen zu verwenden. Die Daten werden von der Steuereinrichtung so lange beibehalten, bis eine Trennung des Anhängers vom Kraftfahrzeug durch die Mittel zur Identifikation des Anhängers festgestellt wurde. Die Mittel zur Identifikation senden dazu während der Abstellphase ein Prüfsignal aus, dessen Veränderung überwacht wird. Als Prüfsignal wird mindestens der Deichselwinkel, also der Winkel zwischen Kraftfahrzeug und Anhänger, herangezogen. Bleibt der Deichselwinkel gleich, so ist davon auszugehen, dass weiterhin derselbe Anhänger verbunden ist, da es bei einem Wechsel des Anhängers nahezu ausgeschlossen ist, den überwachten Deichselwinkel willentlich oder zufällig zu reproduzieren. Die Betriebsphase kann von der Abstellphase vorzugsweise durch den Zustand einer Zündeinrichtung einer Brennkraftmaschine unterschieden werden.

In einer bevorzugten Ausführung ist die Kupplungseinrichtung zur Messung des Deichselwinkels des Anhängers ausgebildet. Kupplungseinrichtungen zur Messung des Deichselwinkels sind aus dem Stand der Technik, beispielsweise der DE 103 34 000 A1, bereits bekannt.

In einer bevorzugten Ausführung ist an dem Kraftfahrzeug eine Bilderfassungseinrichtung zur optischen Bestimmung des Deichselwinkels des Anhängers angeordnet. Als Bilderfassungseinrichtung kann beispielsweise eine am Heck des Kraftfahrzeugs angeordnete Rückfahrkamera verwendet werden. Die Bilderfassungseinrichtung kann durch geeignete Bilderkennungsverfahren die Deichsel des Anhängers erkennen und daraus den Deichselwinkel errechnen.

In einer bevorzugten Ausführung ist der Anhänger mittels einer elektrischen Steckverbindung mit dem Kraftfahrzeug verbindbar, wobei die elektrische Steckverbindung das Prüfsignal überträgt. Die elektrische Steckverbindung dient der Stromversorgung des Anhängers für dessen Lichtfunktionen.

In einer bevorzugten Ausführung repräsentiert das Prüfsignal einen elektrischen Widerstand einer Glühlampe des Anhängers und wird in Intervallen übertragen, wobei die Trennung des verbundenen Anhängers vom Kraftfahrzeug festgestellt wird, wenn der Widerstandswert unendlich hoch ist. Während der Abstellphase wird in definierten Intervallen ein Prüfsignal zum verbundenen Anhänger ausgesandt, das den elektrischen Widerstand einer Glühlampe repräsentiert. Wird der Widerstand zu einem Zeitpunkt unendlich hoch, so lässt sich daraus schließen, dass der Anhänger abgekoppelt wurde. Vorzugsweise erfolgt noch während der Betriebsphase eine Diagnose der Glühlampen, so dass keine defekte Glühlampe überwacht wird. Für die Widerstandsmessung eignet sich besonders ein autonomer Mikrocontroller mit geringer Stromaufnahme und kurzer Messdauer, der regelmäßig von einem Timer aktiviert wird. Wird eine Trennung des Anhängers während der Abstellphase festgestellt, so werden die gesammelten Daten der Steuereinrichtung zu Beginn der nachfolgenden Betriebsphase zurückgesetzt.

In einer bevorzugten Ausführung repräsentiert das Prüfsignal ein von mehreren Glühlampen des Anhängers gebildetes Widerstandsmuster, das während der Abstellphase ermittelt und mit dem ermittelten Widerstandsmuster zur folgenden Betriebsphase verglichen wird, wobei die Trennung des verbundenen Anhängers vom Kraftfahrzeug festgestellt wird, wenn sich die Widerstandsmuster unterscheiden. Werden die Widerstände mehrerer Glühlampen (Bremslicht, Schlusslicht, Blinker) des Anhängers überwacht, so ergibt sich ein Widerstandsmuster, das genau einem bestimmten Anhänger zugeordnet werden kann. Ist das Widerstandsmuster am Ende der Betriebsphase dasselbe wie zu Beginn der nachfolgenden Betriebsphase, so kann davon ausgegangen werden, dass der Anhänger, zu dem die Steuereinrichtung Daten gesammelt hat, weiterhin verbunden ist. Ändert sich das Widerstandsmuster, dann werden die gesammelten Daten der Steuereinrichtung zurückgesetzt.

In einer bevorzugten Ausführung weist die elektrische Steckverbindung einen Magnetschalter auf, wobei das Prüfsignal ein magnetisches Feld- in dem Magnetschalter repräsentiert und wobei die Trennung des verbundenen Anhängers vom Kraftfahrzeug festgestellt wird, wenn sich das magnetische Feld ändert. In die elektrische Steckverbindung ist ein Magnetschalter integriert, der beim Lösen der elektrischen Steckverbindung einen Kontakt schaltet und so einen Impuls für die Mittel zur Identifikation generiert. Wird eine Trennung des Anhängers während der Abstellphase festgestellt, so werden die gesammelten Daten der Steuereinrichtung zu Beginn der nachfolgenden Betriebsphase zurückgesetzt.

In einer weiteren bevorzugten Ausführung weist die elektrische Steckverbindung einen Mechanismus mit zwei inneren Zuständen von der Art einer Flip-Flop-Logik auf. Während der Betriebsphase und bei verbundenem Anhänger wird von dem Mittel zur Identifikation ein "AN"-Zustand aktiviert, der auch während der Abstellphase persistent ist. Wird während der Abstellphase der verbundene Anhänger von der Kupplungseinrichtung getrennt und somit auch die elektrische Steckverbindung gelöst, dann ergibt sich ein "AUS"-Zustand, der auch bei einem erneuten ankuppeln eines beliebigen Anhängers bestehen bleibt. In der nachfolgenden Betriebsphase können die Mittel zur Identifikation am Zustand des Flip-Flop-Mechanismus erkennen, ob derselbe Anhänger weiterhin mit dem Kraftfahrzeug verbunden ist. Der Mechanismus kann mechanisch, elektromagnetisch und/oder elektronisch funktionieren. Beispielsweise kann ein Schnappmechanismus von einem Relais vorgespannt oder ein Permanentmagnet von einem Relais angehoben sein, das bei Lösen der elektrischen Steckverbindung abfällt. Weiterhin könnte ein Kondensator entladen werden oder ein elektronischer Schaltkreis durch einen induktiven Spannungsimpuls aktiviert werden, der beim Lösen der elektrischen Steckverbindung von einer Magnet/Spulenkombination erzeugt wird.

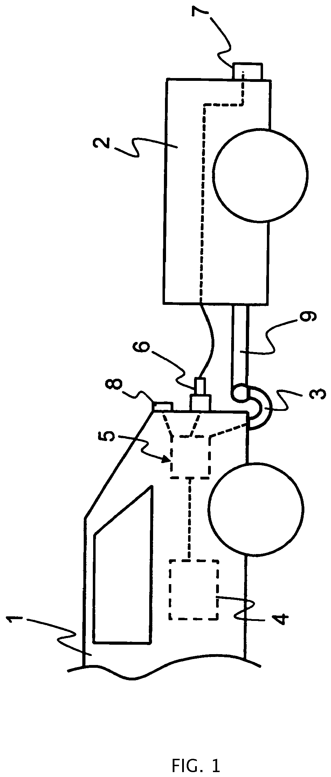

Weitere Einzelheiten und Merkmale der Erfindung ergeben sich aus der nachstehenden Beschreibung eines bevorzugten Ausführungsbeispiels unter Bezugnahme auf die Zeichnung.

Darin zeigt die Figur eine schematische Ansicht des Kraftfahrzeugs mit verbundenem Anhänger.

Gemäß der Figur hat ein Kraftfahrzeug 1 eine heckseitige Kupplungseinrichtung 3 zur lösbaren Verbindung eines Anhängers 2 über dessen Deichsel 9. Der Anhänger 2 ist zudem über eine elektrische Steckverbindung 6 mit dem Kraftfahrzeug 1 verbunden, so dass die Glühlampen 7 am Heck des Anhängers 6 elektrisch versorgt werden können. Das Kraftfahrzeug 1 weist eine Steuerungseinrichtung 4 auf, die während einer Betriebsphase des Kraftfahrzeugs 1 Daten zum aktuell verbundenen Anhänger 2 sammeln und über die Betriebsphase hinaus speichern kann. Das Kraftfahrzeug 1 weist ferner Mittel zur Identifikation 5 des Anhängers 2 auf. Die in der Figur dargestellten Mittel zur Identifikation 5 können einzeln oder in Kombination miteinander Verwendung finden. Dazu zählen eine Kupplungseinrichtung 3, die zur Messung eines Deichselwinkels ausgebildet ist, eine Bilderfassungseinrichtung 8 zur optischen Bestimmung des Deichselwinkels, einen Magnetschalter in der elektrischen Steckverbindung 6 und/oder die Auswertung eines elektrischen Widerstands oder eines Widerstandsmusters der Glühlampen 7 durch die Mittel zur Identifikation 5. Die Mittel zur Identifikation 5 überprüfen während einer Abstellphase des Kraftfahrzeugs 1, ob der während der Betriebsphase verwendete Anhänger 2 bis zur nachfolgenden Betriebsphase mit dem Kraftfahrzeug 1 verbunden bleibt. Wird eine Trennung des Anhängers 2 vom Kraftfahrzeug 1 durch die Mittel zur Identifikation 5 erkannt, so werden die gesammelten Daten der Steuereinrichtung 4 verworfen und die Steuereinrichtung 4 beginnt erneut mit der Datensammlung.

### Liste der Bezugszeichen:

- 1: Kraftfahrzeug
- 2: Anhänger
- 3: Kupplungseinrichtung
- 4: Steuereinrichtung
- 5: Mittel zur Identifikation
- 6: Steckverbindung
- 7: Glühlampe
- 8: Bilderfassungseinrichtung
- 9: Deichsel

## Patentansprüche

1. Verfahren zur Erkennung eines Anhängers (2) eines Kraftfahrzeugs (1), umfassend die folgenden Schritte:
- Sammeln und speichern von Daten zum aktuell verbundenen Anhänger (2) während einer Betriebsphase des Kraftfahrzeugs (1);
- Feststellen einer Trennung des Anhängers (2) vom Kraftfahrzeug (1) mittels eines charakteristischen Prüfsignals, umfassend einen Deichselwinkel des Anhängers (2), während einer Abstellphase des Kraftfahrzeugs (1);
- Verwerfen der Daten, wenn eine Änderung des Prüfsignals erfasst wurde.

2. Verfahren nach Anspruch 1, **dadurch gekennzeichnet, dass** das Prüfsignal einen elektrischen Widerstand mindestens einer Glühlampe (7) des Anhängers (2) und den Deichselwinkel des Anhängers (2) repräsentiert.

3. Vorrichtung zur Erkennung eines Anhängers (2) eines Kraftfahrzeugs (1), wobei der Anhänger (2) durch eine Kupplungseinrichtung (3) mit dem Kraftfahrzeug (1) verbindbar ist und wobei eine Steuereinrichtung (4) während einer Betriebsphase des Kraftfahrzeugs Daten zum aktuell verbundenen Anhänger (2) sammelt und speichert, wobei Mittel zur Identifikation (5) des Anhängers (2) während einer Abstellphase des Kraftfahrzeugs (1) eine Trennung des verbundenen Anhängers (2) vom Kraftfahrzeug (1) mittels eines Prüfsignals feststellen können, **dadurch gekennzeichnet, dass** die Mittel zur Identifikation (5) einen Deichselwinkel des Anhängers (2) während der Abstellphase ermitteln und mit dem Deichselwinkel zur folgenden Betriebsphase vergleichen können, wobei die Trennung des verbundenen Anhängers (2) vom Kraftfahrzeug (1) festgestellt wird, wenn sich die Deichselwinkel unterscheiden.

4. Vorrichtung nach Anspruch 3, **dadurch gekennzeichnet, dass** die Kupplungseinrichtung (3) zur Messung des Deichselwinkels des Anhängers (2) ausgebildet ist.

5. Vorrichtung nach Anspruch 3, **dadurch gekennzeichnet, dass** an dem Kraftfahrzeug (1) eine Bilderfassungseinrichtung (8) zur optischen Bestimmung des Deichselwinkels des Anhängers (2) angeordnet ist.

6. Vorrichtung nach einem der Ansprüche 3 bis 5, **dadurch gekennzeichnet, dass** der Anhänger (2) mittels einer elektrischen Steckverbindung (6) mit dem Kraftfahrzeug (1) verbindbar ist, wobei die elektrische Steckverbindung (6) das Prüfsignal überträgt.

7. Vorrichtung nach Anspruch 6, **dadurch gekennzeichnet, dass** das Prüfsignal einen elektrischen Widerstand einer Glühlampe (7) des Anhängers (2) repräsentiert und in Intervallen übertragen wird, wobei die Trennung des verbundenen Anhängers (2) vom Kraftfahrzeug (1) festgestellt wird, wenn der Widerstandswert unendlich hoch ist.

8. Vorrichtung nach Anspruch 6, **dadurch gekennzeichnet, dass** das Prüfsignal ein von mehreren Glühlampen (7) des Anhängers (2) gebildetes Widerstandsmuster, das während der Abstellphase ermittelt und mit dem ermittelten Widerstandsmuster zur folgenden Betriebsphase verglichen wird, repräsentiert, wobei die Trennung des verbundenen Anhängers (2) vom Kraftfahrzeug (1) festgestellt wird, wenn sich die Widerstandsmuster unterscheiden.

9. Vorrichtung nach Anspruch 6, **dadurch gekennzeichnet, dass** die elektrische Steckverbindung (6) einen Magnetschalter aufweist, wobei das Prüfsignal ein magnetisches Feld in dem Magnetschalter repräsentiert und wobei die Trennung des verbundenen Anhängers (2) vom Kraftfahrzeug (1) festgestellt wird, wenn sich das magnetische Feld ändert.

## Claims

1. Method for detecting a trailer (2) of a motor vehicle (1) comprising the following steps:
- collecting and storing data regarding the currently connected trailer (2) during an operational phase of the motor vehicle (1);
- determining a separation of the trailer (2) from the motor vehicle (1) by means of a characteristic test signal comprising a towbar angle of the trailer (2) during a parking phase of the motor vehicle (1);
- discarding the data when a change of the test signal has been recorded.

2. Method according to claim 1, **characterised in that** the test signal represents an electric resistance of at least one light bulb (7) of the trailer (2) and the towbar angle of the trailer (2).

3. Device for detecting a trailer (2) of a motor vehicle (1) wherein the trailer (2) is connectable to the motor vehicle (1) by a coupling device (3) and wherein a control device (4) collects and stores data regarding the currently connected trailer (2) during an operational phase of the motor vehicle wherein means for identification (5) of the trailer (2) during a parking phase of the motor vehicle (1) can determine a separation of the connected trailer (2) from the motor vehicle (1) by means of a test signal, **characterised in that** the means for identification (5) can determine a towbar angle of the trailer (2) during the parking phase and compare it with the towbar angle for the following operational phase wherein the separation of the connected trailer (2) from the vehicle (1) is determined when the towbar angles are different.

4. Device according to claim 3, **characterised in that** the coupling device (3) is configured for measuring the towbar angle of the trailer (2).

5. Device according to claim 3, **characterised in that** an image recording device (8) is arranged on the motor vehicle (1) for optically determining the towbar angle of the trailer (2).

6. Device according to any one of claims 3 to 5, **characterised in that** the trailer (2) is connectable to the motor vehicle (1) by means of an electric plug connection (6) wherein the electric plug connection (6) transmits the test signal.

7. Device according to claim 6, **characterised in that** the test signal represents an electric resistance of a light bulb (7) of the trailer (2) and is transmitted in intervals wherein the separation of the connected trailer (2) from the motor vehicle (1) is determined when the resistance value is infinitely high.

8. Device according to claim 6, **characterised in that** the test signal represents a resistance pattern formed by a plurality of light bulbs (7) of the trailer (2), said resistance pattern being determined during the parking phase and being compared with the determined resistance pattern for the following operational phase wherein the separation of the connected trailer (2) from the motor vehicle (1) is determined when the resistance patterns are different.

9. Device according to claim 6, **characterised in that** the electric plug connection (6) comprises a magnetic switch wherein the test signal represents a magnetic field in the magnetic switch and wherein the separation of the connected trailer (2) from the motor vehicle (1) is determined when the magnetic field changes.

## Revendications

1. Procédé de détection d'une remorque (2) d'un véhicule automobile (1), comprenant les étapes suivantes :
- collecter et stocker des données concernant la remorque (2) actuellement attelée pendant une phase de fonctionnement du véhicule automobile (1) ;
- déterminer le fait que la remorque (2) est séparée du véhicule automobile (1) au moyen d'un signal de test caractéristique, comprenant un angle d'attelage de la remorque (2), pendant une phase d'arrêt du véhicule automobile (1) ;
- rejeter les données lorsqu'une modification du signal de test a été détectée.

2. Procédé selon la revendication 1, **caractérisé en ce que** le signal de test représente une résistance électrique d'au moins une lampe (7) de la remorque (2) et l'angle d'attelage de la remorque (2).

3. Dispositif de détection d'une remorque (2) d'un véhicule automobile (1),
dans lequel la remorque (2) peut être reliée au véhicule automobile (1) par l'intermédiaire d'un dispositif d'attelage (3),
dans lequel un dispositif de commande (4) collecte et stocke pendant une phase de fonctionnement du véhicule automobile des données concernant la remorque (2) actuellement attelée
et dans lequel des moyens destinés à l'identification (5) de la remorque (2) peuvent détecter pendant une phase d'arrêt du véhicule automobile (1) le fait que la remorque attelée (2) est séparée du véhicule automobile (1) au moyen d'un signal de test,
**caractérisé en ce que** les moyens destinés à l'identification (5) peuvent déterminer un angle d'attelage de la remorque (2) pendant la phase d'arrêt et peuvent le comparer à l'angle d'attelage dans la phase de fonctionnement suivante, le fait que la remorque attelée (2) est séparée du véhicule automobile (1) étant constaté lorsque les angles d'attelage sont différents.

4. Dispositif selon la revendication 3, **caractérisé en ce que** le dispositif d'attelage (3) est conçu pour mesurer l'angle d'attelage de la remorque (2).

5. Dispositif selon la revendication 3, **caractérisé en ce qu'**un dispositif d'acquisition d'images (8) destiné à la détermination optique de l'angle d'attelage de la remorque (2) est agencé au niveau du véhicule automobile (1).

6. Dispositif selon l'une des revendications 3 à 5, **caractérisé en ce que** la remorque (2) peut être reliée au moyen d'un connecteur électrique (6) au véhicule automobile (1), le connecteur électrique (6) transmettant le signal de test.

7. Dispositif selon la revendication 6, **caractérisé en ce que** le signal de test représente une résistance électrique d'une lampe (7) de la remorque (2) et est transmis par intervalles, le fait que la remorque attelée (2) est séparée du véhicule automobile (1) étant constaté lorsque la valeur de résistance est infiniment grande.

8. Dispositif selon la revendication 6, **caractérisé en ce que** le signal de test représente un modèle de résistance qui est formé par plusieurs lampes (7) de la remorque (2) et qui est déterminé pendant la phase d'arrêt et comparé au modèle de résistance déterminé pour la phase de fonctionnement suivante, le fait que la remorque attelée (2) est séparée du véhicule automobile (1) étant constaté lorsque les modèles de résistance sont différents.

9. Dispositif selon la revendication 6, **caractérisé en ce que** le connecteur électrique (6) comporte un interrupteur magnétique, le signal de test représentant alors un champ magnétique dans l'interrupteur magnétique et le fait que la remorque attelée (2) est séparée du véhicule automobile (1) étant constaté lorsque le champ magnétique varie.
